# EUROPÄISCHE PATENTANMELDUNG

(11) **EP 0 986 234 A2**
(43) Veröffentlichungstag der Anmeldung: **15.03.2000**
(21) Anmeldenummer: 99111770.6
(22) Anmeldetag: 18.06.1999
(51) Int. Cl.: H04M 1/02, H04M 1/03

(54) **Akustik bei tragbaren Telefonen**

(30) Priorität: 09.09.1998 DE 19841061
(71) Anmelder: ROBERT BOSCH GMBH, 70442 Stuttgart (DE)
(72) Erfinder: Bieneck, Uwe, 31234 Edemissen (DE); Reuter, Markus, 38102 Braunschweig (DE); Edler, Klaus, 31249 Hohenhameln (DE); Lerchner, Henry, 31224 Peine (DE)

(57) **Zusammenfassung**

In einem tragbaren Telefon wird das im Batteriepack vorhandene zusätzliche Volumen zur Verbesserung der Akustik des Telefons verwendet. Dabei wird das akustische Volumen des Telefongehäuses und das zusätzliche Volumen des Batteriepacks miteinander verbunden, wobei die Verbindung durch mindestens eine Öffnung oder Kanal sowohl im Batteriepack als auch im Telefongehäuse erfolgt.

## Beschreibung

Die Erfindung betrifft die Akustik bei tragbaren Telefonen und insbesondere betrifft die Erfindung ein tragbares Telefon mit verbesserter Akustik.

Bei derzeitigen Telefonen, insbesondere tragbaren Telefonen oder Mobiltelefonen, ist das Bestreben zu beobachten, die Telefongeräte immer leichter und kleiner zu gestalten, da dies den Komfortwünschen des Benutzers entgegenkommt. Dies steht im Gegensatz dazu, daß ein gewisser Raum in dem Telefongerät benötigt wird, um eine gute Akustik zu erzielen.

Der Erfindung liegt daher die Aufgabe zugrunde, die Akustik eines tragbaren Telefons zu verbessern.

Die Aufgabe wird durch die Merkmale des Anspruchs gelöst. Bevorzugte Ausgestaltungen der Erfindung sind Gegenstand der Unteransprüche.

In einem tragbaren Telefon gemäß der Erfindung wird das im Batteriepack vorhandene zusätzliche Volumen zur Verbesserung der Akustik des Telefons verwendet, da im Batteriepack aufgrund von beispielsweise Designvorgaben nicht genutztes zusätzliches Volumen vorhanden ist.

Vorzugsweise wird das akustische oder zusätzliche Volumen des Telefongehäuses und das zusätzliche Volumen des Batteriepack miteinander verbunden. Dies kann bewerkstelligt werden, in dem das Volumen des Telefongehäuses und das zusätzliche Volumen des Batteriepacks durch mindestens eine Öffnung sowohl im Batteriepack als auch im Telefongehäuse miteinander verbunden werden.

Diese Öffnungen können beispielsweise durch Verbindungskanäle realisiert werden.

Ferner sind die das zusätzliche Volumen des Batteriepacks bildenden Hohlräume des Batteriepacks miteinander durch Öffnungen oder Kanäle verbunden bzw. können auch einzeln direkt mit dem akustischen Volumen des Telefongehäuses verbunden sein.

Eine bevorzugte Ausführungsform der Erfindung ist nachfolgend anhand der einzigen Zeichnung erläutert.

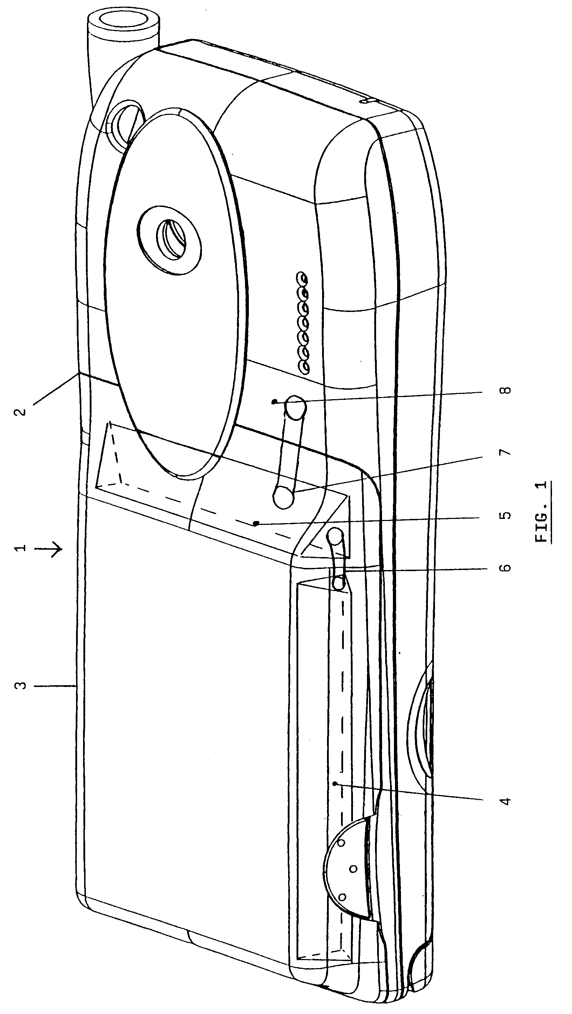

Fig. 1 zeigt eine perspektivische Darstellung eines tragbares Telefons.

Fig. 1 zeigt in perspektivischer Ansicht ein tragbares Telefon 1 bestehend aus einem Telefongehäuse 2 und einem daran befestigten Batteriepack 3. In dem Batteriepack 3 sind zusätzliche Hohlraume 4 und 5 vorhanden, die das zusätzliche Volumen des Batteriepacks 3 bilden. In der perspektivischen Ansicht sind nicht alle Hohlräume des Batteriepacks 3 dargestellt. Die beiden dargestellten Hohlräume 4 und 5 sind mittels eines Kanals 6 miteinander verbunden. Das sich durch den Verbindungskanal 6 ergebende zusätzliche akustische Volumen des Batteriepacks 3 ist über einen weiteren Verbindungskanal 7 (oder entsprechende angeordnete Öffnungen) mit dem akustischen Volumen 8 des Telefongehäuses 2 verbunden. In der bevorzugten Ausführungsform ist nur ein Verbindungskanal 7 dargestellt, der den vorderen Hohlraum 5 mit dem akustischen Volumen 8 des Telefongeräts verbindet. Die Anzahl der Verbindungskanäle oder Öffnungen richten sich nach den Ausgestaltungen des tragbaren Telefons.

## Patentansprüche

1. Tragbares Telefon, **dadurch gekennzeichnet**, daß das im Batteriepack (3) vorhandene zusätzliche Volumen (4, 5) zur Verbesserung der Akustik des Telefons (1) verwendet wird.

2. Tragbares Telefon nach Anspruch 1, **dadurch gekennzeichnet**, daß das Akustikvolumen (8) des Telefongehäuses (2) und das zusätzliche Volumen (4, 5) des Batteriepacks (3) miteinander verbunden sind.

3. Tragbares Telefon nach Anspruch 2, **dadurch gekennzeichnet**, daß das Volumen (8) des Telefongehäuses und das zusätzliche Volumen (4, 5) des Batteriepacks (3) durch mindestens eine Öffnung oder Kanal (7) sowohl im Batteriepack (3) als auch im Telefongehäuse (2) miteinander verbunden sind.

4. Tragbares Telefon nach einem der Ansprüche 2 oder 3, **dadurch gekennzeichnet**, daß die das zusätzliche Volumen des Batteriepacks (3) bildenden Hohlräume (4, 5) miteinander durch Öffnungen oder Kanäle (6) miteinander verbunden sind.
